# FASCICULE DE BREVET EUROPEEN

(11) **EP 2 050 207 B1**
(45) Date de publication et mention de la délivrance du brevet: **20.01.2010**
(21) Numéro de dépôt: 07788324.7
(22) Date de dépôt: 09.08.2007
(51) Int. Cl.: H04B 7/185

(54) **DISPOSITIF D'AMPLIFICATION LARGE BANDE**
BREITBAND-VERSTÄRKUNGSEINRICHTUNG
BROADBAND AMPLIFYING DEVICE

(30) Priorité: 10.08.2006 FR 0653344
(43) Date de publication de la demande: 22.04.2009
(73) Titulaire: THALES, 92200 Neuilly sur Seine (FR)
(72) Inventeur: VOISIN, Philippe, F-31100 Toulouse (FR); BELMONT, Jacques, F-31170 Tournefeuille (FR)
(74) Mandataire: Esselin, Sophie
(86) Numéro de dépôt international: PCT/EP2007/058256
(87) Numéro de publication internationale: WO 2008/017699

(56) Documents cités:
- EP-A- 1 499 013
- EP-A1- 0 584 012
- WO-A-2006/060114
- FR-A- 2 783 378

## Description

La présente invention concerne un dispositif d'amplification pour satellite adapté pour répartir flexiblement une pluralité de canaux de transmission reçus vers un signal de faisceau de sortie.

Un dispositif d'amplification pour satellite est décrit dans EP-A-1 499 013 (Alcatel).

Dans le cas général des missions spatiales, l'évolution des transmissions satellites vers des utilisateurs équipés de terminaux d'émission/réception à capacité réduite et de petite dimension implique une augmentation de la qualité de réception du segment embarqué ainsi qu'une augmentation de la puissance des signaux retransmis au sol. Ces augmentations de performance sont obtenues par l'accroissement des gains antenne à bord, ce qui ne peut être obtenu qu'en réduisant les dimensions de leurs couvertures au sol. Ces réductions de couverture nécessitent, pour couvrir une zone géographique de couverture particulière au sol, de générer plusieurs faisceaux ou spots afin d'échantillonner la zone géographique. De telles couvertures multifaisceaux ou multispots rendent possibles des liaisons avec des petits terminaux sol mais elles posent le problème de la gestion des capacités bord et plus particulièrement de l'allocation des canaux reçus vers les faisceaux transmis en fonction :
- des densités différentes de trafic,
- d'évolutions dans le temps des densités de trafic.

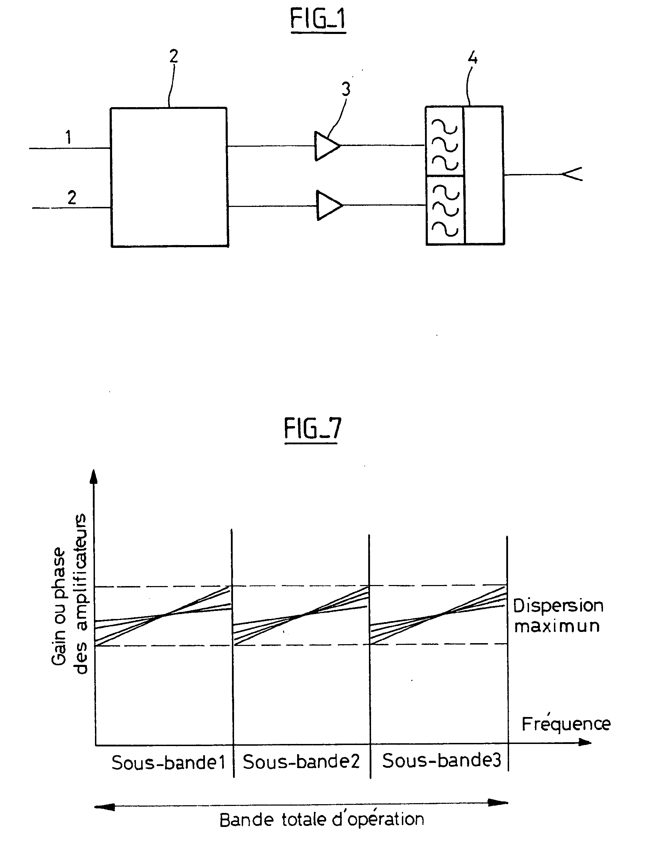

Ainsi, de manière connue et comme représenté schématiquement sur l'architecture 1 de la figure 1, un satellite reçoit deux signaux correspondant chacun à un canal de transmission et fournit un faisceau en sortie. Les deux canaux sont traités par une section d'entrée 2 qui effectue :
- une réception faible bruit, une conversion de fréquence adéquate et un filtrage adapté pour chacun des deux canaux de transmission,
- une restitution de chacun des deux canaux vers un amplificateur 3.

Un canal de transmission correspond à une bande de fréquence de transmission et peut correspondre à une porteuse unique ou un ensemble de porteuses ou sous-canaux.

Chaque canal de transmission est amplifié par l'amplificateur 3 qui lui est associé. Les amplificateurs 3 sont des amplificateurs haute puissance et sont généralement réalisés par des tubes à ondes progressives ou des amplificateurs à état solide. Afin de disposer de plusieurs canaux par faisceau, il faut combiner les canaux au travers de multiplexeurs de sortie 4. Le multiplexeur de sortie 4 ou OMUX (Output MUItipleXer), prévu en sortie de chaque amplificateur, connu de l'Homme du Métier, comprend des filtres et un guide commun qui est destiné à combiner les canaux de transmission après leur amplification. Dans le cas de la figure 1, le multiplexeur de sortie 4 reçoit deux canaux de transmission et fournit un signal de faisceau. Le signal de faisceau est ensuite envoyé sur une source non représentée tel qu'un cornet qui rayonne vers un réflecteur non représenté pour la formation du faisceau. Ainsi, une telle architecture permet d'avoir deux canaux de transmission par faisceau à la descente.

Cependant, cette architecture n'est pas flexible et associe une amplification canalisée (un amplificateur par canal et recombinaison des canaux au travers de l'OMUX) à une antenne passive. Cette solution impose un plan de fréquence figé (qui définit la solution OMUX) sans possibilité de modification en orbite.

Or, les opérateurs n'ont pas toujours une visibilité très nette sur la répartition future du trafic (et donc de la puissance) sur les couvertures adressées et ont donc besoin de disposer d'une certaine flexibilité permettant de s'adapter pendant la durée de vie du satellite aux besoins en trafic résultant de la demande et du succès de services sur différentes zones géographiques. Il est donc important de pouvoir router les canaux de transmission de manière flexible vers les faisceaux, c'est à dire de telle manière que le nombre total de canaux traités par la charge utile puisse être réparti vers les différents faisceaux conformément à la demande de trafic et ce durant la durée de vie du satellite. En ce sens, l'architecture telle que représentée en figure 1 ne permet aucune flexibilité en terme de nombre de canaux alloués par faisceau et requiert un nombre d'amplificateurs qui est imposé par le nombre de canaux à amplifier. Il n'est pas possible, dans l'état de la technique exposé, de pouvoir générer n'importe quel canal dans un jeu possible de canaux ou encore de pouvoir faire évoluer les plans de fréquence pendant la durée de vie du satellite.

Cette dernière contrainte a imposé aux équipes de recherche de la Demanderesse de remplacer l'amplification canalisée par une amplification répartie dans laquelle tous les amplificateurs amplifieraient tous les canaux.

Selon cette solution, les canaux sont combinés avant amplification, l'amplification est commune à tous les canaux et alimente directement l'antenne. Il n'est donc plus nécessaire d'utiliser des OMUX et donc, par nature, la solution est compatible de l'amplification de n'importe quelle distribution fréquentielle des canaux (la seule contrainte étant que le nombre de canaux amplifiés est limité par le nombre d'amplificateurs mis en jeu).

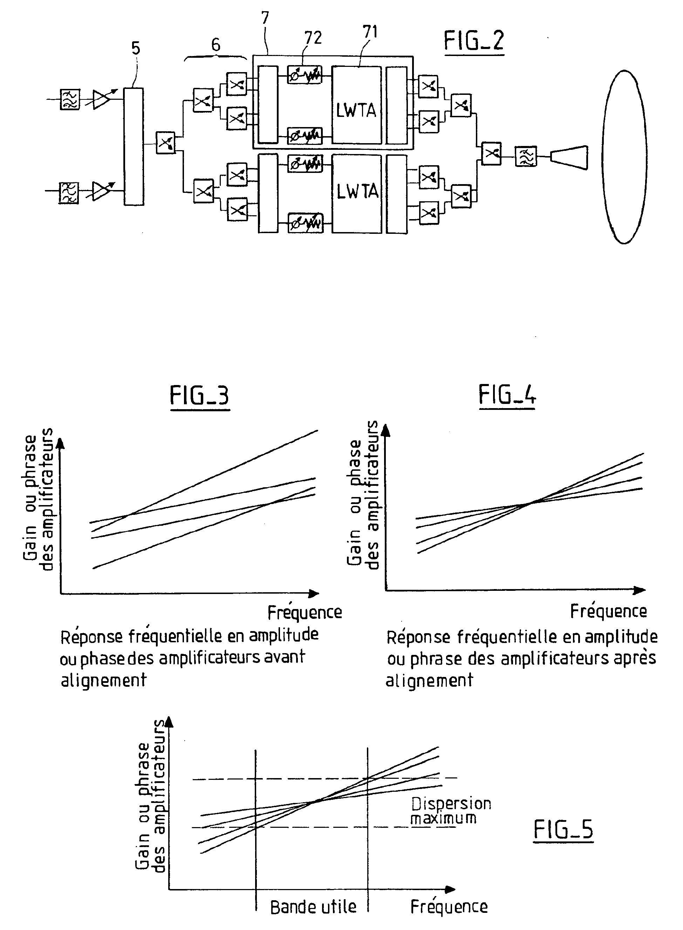

La figure 2 illustre cette dernière solution pour la mise en parallèle des amplificateurs.

Les deux canaux reçus, après filtrage et amplification, sont d'abord sommés par un combineur 5 de canaux. Le signal résultant est divisé en puissance par des diviseurs 6 pour alimenter tous les amplificateurs actifs 71 des blocs d'amplification 7. Il y a autant de sorties de diviseurs que d'amplificateurs actifs participant à l'amplification répartie. En l'espèce, il est utilisé deux fois 4 amplificateurs actifs, le nombre d'amplificateurs implantés incluant de la redondance en cas de panne (deux fois 6 amplificateurs inactifs installés, soit 12 tubes pour 8 actifs).

Des déphaseurs et atténuateurs 72 de réglage de l'"alignement" des amplificateurs en phase et en amplitude sont placés avant les amplificateurs : il y a donc un réglage unique par amplificateur. Le réglage est typiquement effectué à la fréquence centrale de la bande à traiter, ce qui limite la correction qui peut être réalisée. Les figures 3 et 4 illustrent le résultat de la correction entre quatre tubes effectuée selon ce principe et le mode de la figure 2. La figure 3 illustre la réponse fréquentielle en amplitude ou phase des amplificateurs avant alignement alors que la figure 4 illustre la réponse fréquentielle en amplitude ou phase des amplificateurs après alignement.

Si, dans le principe, l'amplification répartie répond au problème posée, dans la pratique elle pose le problème de la mise en parallèle d'amplificateurs sur la bande de transmission totale occupée par les canaux : il faut que l'alignement des amplificateurs soit performant sur une bande de fréquence large. En effet, la figure 5 illustre la limitation en terme de bande passante de la mise en parallèle ainsi réalisée. La dispersion "acceptable" (fonction de la perte de puissance résultante) définit la bande passante résultante.

La présente invention vise donc à fournir un dispositif pour satellite adapté pour amplifier et répartir flexiblement une pluralité n de canaux de transmission d'entrée vers une sortie correspondant à un faisceau, avec une performance du réglage en amplitude et en phase des amplificateurs sur une bande de fréquence large.

A cet effet, l'invention a pour objet un dispositif d'amplification pour satellite pour amplifier une pluralité de n canaux de transmission vers une sortie correspondant à un faisceau, le dispositif comportant :
- des moyens de combinaison de bandes de fréquences comprenant n entrées pour recevoir les n canaux de transmission et q sorties pour fournir respectivement les canaux regroupés au sein de q bandes de fréquences,
- des moyens d'amplification de puissance incluant p amplificateurs actifs en parallèle pour l'amplification répartie des n canaux,
- des moyens de réglage du gain et de la phase correspondant aux p amplificateurs de puissance sur les q bandes de fréquence.

Grâce à l'invention, il y a autant de réglages que de bandes de fréquence, permettant de réaliser un réglage spécifique par bande de fréquence. Le réglage étant effectué à la fréquence centrale de chaque bande de fréquence, on obtient au final un réglage large bande.

L'avantage de la solution est de permettre un alignement entre amplificateurs sur une bande de fréquence large, ce qui permet d'utiliser une architecture d'amplificateurs mis en parallèle dans des applications multi-canaux, solution qui ouvre de nombreuses perspectives pour des charges utiles flexibles.

D'autres caractéristiques et avantages de la présente invention apparaîtront dans la description suivante de modes de réalisation de l'invention, donnés à titre illustratif et nullement limitatif.

Dans les figures suivantes :
- La figure 1 représente schématiquement une architecture d'amplification de canaux de transmission selon l'état de la technique,
- La figure 2 représente schématiquement un dispositif d'amplification et d'allocation flexible de canaux de transmission par la mise en parallèle d'amplificateurs selon l'état de la technique,
- La figure 3 illustre la réponse fréquentielle en amplitude ou phase des amplificateurs de la figure 2 avant alignement,
- La figure 4 illustre la réponse fréquentielle en amplitude ou phase des amplificateurs de la figure 2 après alignement,
- la figure 5 illustre la limitation en terme de bande passante de la mise en parallèle ainsi réalisée dans l'état de la technique,
- La figure 6 représente schématiquement un dispositif d'amplification selon un mode de réalisation de l'invention,
- La figure 7 représente schématiquement la réponse fréquentielle en amplitude ou phase des amplificateurs selon le mode de réalisation de la figure 6.

Les figures 1, 2, 3, 4 et 5 ont déjà été décrites en relation avec l'état de la technique.

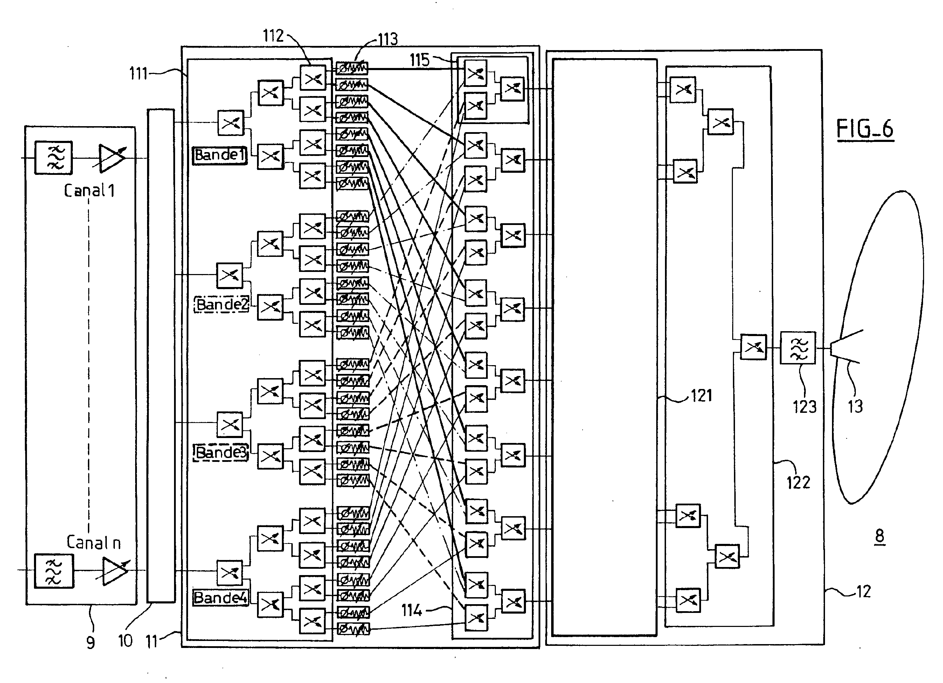

La figure 6 représente un dispositif 8 adapté pour amplifier et répartir flexiblement n signaux C1 (Canal1) à Cn (Canal n) de canaux d'entrée vers un signal de sortie correspondant à un faisceau.

Le dispositif 8 comporte :
- une section 9 d'entrée à n entrées et n sorties,
- un combineur 10 à n entrées et q sorties (q=4 dans le présent mode de réalisation),
- une unité 11 de réglage d'amplitude/phase d'amplificateurs,
- un bloc 12 pour l'amplification de puissance,
- une antenne d'émission 13.

La section d'entrée 9 reçoit les n canaux de transmission montants C1 à Cn correspondant chacun à un canal de transmission. La section d'entrée 9 effectue alors les opérations suivantes :
- conversion de fréquence adéquate de chacun des n canaux de transmission C1 à Cn, filtrage, et contrôle de gain,
- restitution des n canaux de transmission sur les n entrées respectives du combineur 10 de bandes de fréquence.

Le combineur 10 comprend des coupleurs bas niveau (c'est à dire fonctionnant à très faible puissance) : le combineur somme entre eux tous les signaux appartenant à chacune des q bandes de fréquence, et restitue ainsi sur chacune de ses q sorties un ensemble de canaux appartenant à la bande de fréquence appropriée.

Les signaux de sorties {Band1 - Band4} du combineur 10 qui peuvent donc correspondre à plusieurs signaux de canaux de transmission sont alors envoyés sur les q entrées de l'unité 11 de réglage d'amplitude/phase d'amplificateurs.

Les q=4 entrées de l'unité 11 sont reliées d'abord à un ensemble 111 de diviseurs qui ont pour fonction de diviser en puissance les signaux {Band1 - Band4}, appelés par la suite signaux de bandes de fréquence, de manière à pouvoir alimenter tous les amplificateurs. Ainsi, dans le cas présent de la présence de 8 amplificateurs actifs, chaque signal de bande de fréquence {Band1 - Band4} est divisé en 8 signaux de bande de fréquence sortant de l'ensemble 111. Chacun des 4*8 signaux de bande de fréquence divisés sont reçus respectivement par un déphaseur/atténuateur de gain 113.

La répartition des canaux de transmission selon 4 bandes de fréquence et l'utilisation de 8 amplificateurs actifs a induit la nécessité d'utiliser 32 déphaseurs/atténuateurs. De façon plus générale, on peut considérer que la répartition des canaux de transmission selon q' bandes de fréquence et l'utilisation de p' amplificateurs actifs induit la nécessité d'utiliser q'*p' déphaseurs/atténuateur.

Le réglage en amplitude et phase pour l'alignement des amplificateurs est réalisé pour chaque sous-bande et pour chaque amplificateur, soit 32 réglages indépendants selon le mode de réalisation de la figure 6.

Les 32 déphaseurs/atténuateurs sont suivis d'un bloc 114 de 8 sommateurs 115 de type 4 vers 1. Chacun des sommateurs 115 comporte quatre entrées, chacune recevant respectivement un signal de sortie d'un déphaseur/atténuateur correspondant à un signal de bande de fréquence propre. Chacun des sommateurs fournit sur sa sortie la combinaison des quatre différents signaux de bande de fréquence à destination de l'un des amplificateurs actifs de puissance d'une unité d'amplification 121 explicitée dans la suite.

Chacun des amplificateurs de puissance de l'unité 121 est généralement un tube amplificateur à ondes progressives ("Linearized Traveling Wave Tube Amplifier" ou LTWTA en anglais) mais il peut également s'agir d'un amplificateur à semi-conducteur SSPA ("Solid State Power Amplifier" en anglais).

Les amplificateurs de l'unité 121 sont suivis par un sommateur 122 de type 8 vers 1, à l'issue duquel le signal de sortie est filtré par un filtre 123 et ensuite envoyé sur une source 13 qui rayonne pour la formation du faisceau.

La figure 7 représente schématiquement la réponse fréquentielle en amplitude ou phase des amplificateurs de l'unité 121 selon le mode de réalisation de la figure 6. La dispersion maximum pour chaque bande est limitée alors que la bande totale d'opération est large et n'est pas cantonnée par la perte de puissance résultante.

L'avantage de la solution est de permettre un alignement entre amplificateurs sur une bande de fréquence large ce qui permet d'utiliser des amplificateurs mis en parallèle dans des applications multi-canaux, solution qui ouvre de nombreuses perspectives pour des charges utiles flexibles.

En outre, l'emploi d'un nombre plus important de déphaseurs et atténuateurs entraîne un impact en terme de masse, de consommation, et coûts qui demeure parfaitement acceptable.

## Revendications

1. Dispositif (8) d'amplification pour satellite pour amplifier une pluralité de p canaux de transmission vers une sortie correspondant à un faisceau, le dispositif comportant :
- des moyens (10) de combinaison de bandes de fréquences comprenant n entrées pour recevoir les n canaux de transmission et q sorties pour fournir respectivement les canaux regroupés au sein de q bandes de fréquences (Band1 - Band4),
- des moyens (121) d'amplification de puissance incluant p amplificateurs en parallèle pour l'amplification répartie des n canaux,
- des moyens (113) de réglage du gain et de la phase correspondant aux p amplificateurs de puissance sur les q bandes de fréquence.

2. Dispositif selon, la revendication 1, **caractérisé en ce que** la répartition des canaux de transmission selon q bandes de fréquence et l'utilisation de p amplificateurs actifs induit la nécessité d'utiliser au moins q*p déphaseurs/atténuateur pour leur réglage individuel.

## Claims

1. Amplification device (8) for a satellite in order to amplify a plurality of p transmission channels to an output corresponding to a beam, the device comprising:
- frequency band combining means (10) comprising n inputs in order to receive the n transmission channels and q outputs in order to supply respectively the channels grouped together within q frequency bands (Band1 - Band4),
- power amplification means (121) including p amplifiers in parallel for the distributed amplification of the n channels,
- gain and phase adjustment means (113) corresponding to the p power amplifiers on the q frequency bands.

2. Device according to Claim 1, **characterized in that** the distribution of the transmission channels in q frequency bands and the use of p active amplifiers induces the need to use at least q*p phase-shifters/attenuators for their individual adjustment.

## Patentansprüche

1. Verstärkungsvorrichtung (8) für einen Satellit, um eine Vielzahl von p Übertragungskanälen zu einem Ausgang zu verstärken, der einem Strahl entspricht, wobei die Vorrichtung aufweist:
- Einrichtungen (10) zur Kombination von Frequenzbändern, die n Eingänge, um die n Übertragungskanäle zu empfangen, und q Ausgänge enthalten, um je die innerhalb von q Frequenzbändern (Band1 - Band4) zusammengefassten Kanäle zu liefern,
- Einrichtungen (121) zur Leistungsverstärkung, die p parallelgeschaltete Verstärker für die verteilte Verstärkung der n Kanäle umfassen,
- Einrichtungen (113) zur Einstellung der Verstärkung und der Phase entsprechend den p Leistungsverstärkern in den q Frequenzbändern.

2. Vorrichtung nach Anspruch 1, **dadurch gekennzeichnet, dass** die Verteilung der Übertragungskanäle gemäß q Frequenzbändern und die Verwendung von p aktiven Verstärkern zu der Notwendigkeit führt, mindestens q*p Phasenschieber/Dämpfer für ihre individuelle Einstellung zu verwenden.
